# EUROPÄISCHE PATENTSCHRIFT

(11) **EP 0 597 868 B1**
(45) Veröffentlichungstag und Bekanntmachung des Hinweises auf die Patenterteilung: **04.06.1997**
(21) Anmeldenummer: 92913142.3
(22) Anmeldetag: 25.06.1992
(51) Int. Cl.: B23Q 16/04

(54) **VORRICHTUNG ZUM EINLEGEN UND/ODER ENTNEHMEN VON GEGENSTÄNDEN IN/ODER AUS EINER MASCHINE**
DEVICE FOR INTRODUCING OBJECTS INTO, AND REMOVING THEM FROM A MACHINE
DISPOSITIF D'INTRODUCTION D'OBJETS DANS UNE MACHINE ET/OU D'ENLEVEMENT D'OBJETS D'UNE MACHINE

(30) Priorität: 09.07.1991 DE 4122617
(43) Veröffentlichungstag der Anmeldung: 25.05.1994
(73) Patentinhaber: GAIGL, Karl-Josef, D-78224 Singen (DE); GRIMM, Berndt, D-78462 Konstanz (DE); JAITER, Werner, D-78256 Steisslingen (DE); ENGESSER, Karl, D-78247 Hilzingen (DE)
(72) Erfinder: GAIGL, Karl, Josef, D-7707 Singen (DE)
(74) Vertreter: Hiebsch, Gerhard F., Dipl.-Ing.
(86) Internationale Anmeldenummer: EP9201433
(87) Internationale Veröffentlichungsnummer: WO9301023

(56) Entgegenhaltungen:
- WO-A-90/08625
- FR-A- 1 562 169
- US-A- 3 381 578

## Beschreibung

Die Erfindung betrifft eine Vorrichtung zum Einlegen und/oder Entnehmen von Gegenständen in eine und/oder aus einer Maschine nach dem Oberbegriff des unabhängigen Patentanspruches.

In vielen Bereichen der industriellen Fertigung werden in einer entsprechenden Produktionseinrichtung Arbeiten vollzogen, bei denen bestimmte Gegenstände vorher in die Einrichtung eingebracht und/oder nach Vollzug eines Arbeitsschrittes wieder entnommen werden müssen. Im vorliegenden Fall wird besonders auf die Tätigkeit einer Spritzgießmaschine Bezug genommen, jedoch soll die Erfindung nicht darauf beschränkt sein. Es gibt eine Vielzahl von Produktionseinrichtungen, bei denen die vorliegende Erfindung Anwendung finden kann.

Ein Einlegen von Gegenständen kommt vor allem dann in Frage, wenn beispielsweise die Gegenstände in einer Spritzgießmaschine umspritzt werden sollen. Nur beispielhaft wird hier auf das Umspritzen von Nadelkanülen hingewiesen.

Ferner erfordert eine Vielzahl von hochwertigen Gegenständen ein geordnetes Entnehmen und Ablegen auf einer weiteren Transporteinrichtung.

Eine gattungsgemäße Vorrichtung zum Entnehmen von Gegenständen aus beispielsweise einem Formraum zwischen zwei Formhälften einer Maschine, insbesondere einer Spritzgießmaschine offenbart WO-A1-90/08625; bei dieser ist mit einer Formhälfte ein Antriebselement verbunden, welches ein Antriebsrad an der anderen Formhälfte antreibt und hierdurch eine Schwinge in Drehbewegung versetzt. Über die Schwinge ist ein Arm mit einer Entnahmevorrichtung aus dem Formraum führbar, indem die Schwinge in einen Kanal zwischen zwei Führungsstreifen eingleitet und in jeder Endlage des Armes aus diesem Kanal herausfährt; der Arm ist in diesen Endlagen jeweils zwischen einem festen Anschlag und einem weiteren Element festgelegt. In jeder Endlage bewirkt eine an der Formhälfte festliegende Verriegelungseinheit zusammen mit dem jeweiligen Anschlag die Festlegung des Armes. Diese Vorrichtung hat sich in der Praxis bewährt, weist allerdings eine nicht unwesentliche Baugröße auf und bietet sich deshalb vor allem für größere Spritzgießmaschinen an. Bei der geforderten Qualität von hergestellten Gegenständen wird es heute jedoch immer notwendiger, auch für kleinere Spritzgießmaschinen Roboter zu entwickeln, welche Gegenstände in diese Spritzgießmaschinen einlegen können bzw. geordnet entnehmen.

Die FR-A-1562169 beschreibt eine Einrichtung, mit der Werkzeuge auf Werkzeugmaschinen im Hinblick auf ihre schrittweise axiale Indexierung automatisch in Stellung gebracht werden sollen.

In Kenntnis diese Standes der Technik liegt der Erfindung die Aufgabe zugrunde, vor allem für kleinere Produktionseinrichtungen einen leistungsfähigen Roboter zu entwickeln, der störungsfrei arbeitet, jedoch nur geringe Maße aufweist.

Zur Lösung dieser Aufgabe führt die Lehre des unabhängigen Patentanspruches, die Unteransprüche geben günstige Fortentwicklungen an.

Nach der Erfindung ist der Mitnehmer an einer Kurvenscheibe exzentrisch angeordnet, welche einen Drehhebel betätigt, der mit einem der den Führungskanal bildenden Anschlagstreifen zur Verriegelung des Schlittens in den Endlagen zusammenwirkt. Der Drehhebel dient also der jeweiligen Endlagenfixierung, es entfallen besondere Getriebeelemente für die Endlagenfixierung; der Drehhebel wirkt direkt mit der die Kurbel ersetzenden Kurvenscheibe bzw. mit dem einen den Führungskanal bildenden Streifen zusammen. Somit werden zur Endlagenfixierung Elemente verwendet, die bereits dem Schlittenantrieb dienen - die Anzahl der benötigten Elemente wird vermindert und die gesamte Vorrichtung vereinfacht. Dadurch kann die Baueinheit kleiner gehalten werden und ist gegen einen Verschleiß weniger anfällig.

Der Drehhebel liegt mit einer Laufrolle dem Umfang der Kurvenscheibe an; der Drehhebel wird von einer Änderung des Umfanges der Kurvenscheibe beeinflußt. Auf diese Weise wird der Drehhebel selbst durch die Kurvenscheibe direkt aus einer Raststellung gebracht bzw. kann, der Kurvenscheibe folgend, in eine Raststellung einfahren. Diese direkte Abhängigkeit des Drehhebels von der Bewegung der Kurvenscheibe ermöglicht eine absolut exakte Einstellung, wann der Drehhebel aus bzw. in seine Raststellung gelangen soll. Auch bei längerem Betrieb der Vorrichtung ergibt sich keine Veränderung, so daß in jedem Fall eine gesicherte Endlagenfixierung bewirkt wird.

Im vorliegenden Ausführungsbeispiel weist die Kurvenscheibe zwei Umfangsabschnitte auf, welche jeweils einen unterschiedlichen Radius besitzen. Zwischen den Radien sind die Abschnitte über Steigflächen miteinander verbunden, welche ein Auslenken des Drehhebels bewirken. Dabei soll die Zuordnung von Mitnehmer, Laufrolle und Steigflächen so erfolgen, daß die Laufrolle sich dann am Beginn oder Ende einer Steigfläche befindet, wenn der Mitnehmer in den Führungskanal eintaucht oder aus ihm herausfährt. Soll beispielweise der Mitnehmer, der bevorzugt ebenfalls als Rolle ausgebildet ist, in den Führungkanal eintauchen und somit den Schlitten linear bewegen, so muß in diesem Augenblick eine Verriegelung gelöst werden, in dem sich die Laufrolle an dem Drehhebel am Beginn einer Steigfläche befindet. Sobald sich die Laufrolle auch nur um einen Bruchteil auf der Steigfläche bewegt hat, soll bereits die Endlagenfixierung aufgehoben sein. Dies wird vor allem dadurch bewirkt, daß eine für die Endlagenfixierung notwendige Rastnase eine schräge Anschlagkante aufweist, welche mit einer entsprechenden Kante an dem Streifen zusammenwirkt.

Gleiches gilt selbstverständlich auch für die andere Endlage, in der sich der Drehhebel über eine Stütznase mit einer Schrägfläche an einer Schrägfläche des Streifens abstützt.

Es versteht sich von selbst, daß der Drehhebel relativ nahe an der Kurvenscheibe angeordnet ist und dort um einen Drehbolzen dreht. Dieser Drehbolzen verläuft in etwa parallel zu der Drehachse für die Kurvenscheibe. Damit der Drehhebel mit seiner Laufrolle immer an dem Umfang der Kurvenscheibe anliegt, ist eine den Drehhebel ortsfest abstützende Schraubenfeder vorgesehen.

Hervorzuheben ist vor allem der einfache Aufbau der gewählten Endlagenfixierung, welche absolut sauber und störungsfrei arbeitet.

Damit der Benutzer die Wahl hat, ob er eine Produktionseinrichtung mit oder ohne einen Roboter fahren will, ist erfindungsgemäß zusätzlich vorgesehen, daß die Vorrichtung auch von der Produktionseinrichtung abgekoppelt werden kann. Da der Mitnehmer in fester Wirkverbindung mit der Produktionseinrichtung steht, ist erfindungsgemäß daran gedacht, den einen Streifen, über welchen das Handlinggerät beispielweise in den Formraum einer Spritzgießmaschine eingeschwenkt wird, so entfernbar auszugestalten, daß er sich nicht mehr im Zugriffsbereich des Mitnehmers befindet. Hierzu hängt der Streifen an Gleitbolzen, welche bevorzugt den Schlitten durchsetzen, so daß keinerlei zusätzlicher Raum notwendig ist.

Andererseits des Streifens sollen die Gleitbolzen über einen Stift miteinander verbunden sein, der auch einen schrägen Führungsschlitz in einer Kulisse durchsetzt. Da diese Kulisse verschiebbar auf dem Schlitten sitzt, folgt der Stift je nach Verschiebung der Kulisse dem Führungsschlitz nach oben oder nach unten, wodurch der Streifen angehoben oder abgesenkt wird.

Als Antrieb für die Kulisse kann ein Pneumatikzylinder dienen, dessen Kolbenstange mit der Kulisse verbunden ist, Jedoch sind auch andere Antriebe denkbar und sollen vom Erfindungsgedanken umfaßt sein.

Damit kein unbeabsichtigtes Absenken des Streifens erfolgen kann, ist in angehobener Endlage des Streifens eine Verriegelung vorgesehen. Hierzu dient eine Rastklinke, welche den Stift in der angehobenen Endlage festlegt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 ; eine Seitenansicht einer erfindungsgemäßen Vorrichtung zum Einlegen und/oder Entnehmen von Gegenständen insbesondere aus einem Formraum einer Spritzgießmaschine;
Fig. 2 ; einen Längsschnitt durch die Vorrichtung gem. Fig.1;
Fig. 3 ; den Querschnitt durch die Vorrichtung entlang Linie III - III in Fig 2;
Fig. 4 ; den Querschnitt durch die erfindungsgemäße Vorrichtung entlang Linie IV - IV in Fig. 2;
Fig. 5 ; den Horizontalschnitt durch die Vorrichtung entlang Linie V - V in Fig. 4;
Fig. 6 ; eine zum Teil entlang Linie VI - VI in Fig. 2 geschnittene Draufsicht auf eine geöffnete Vorrichtung mit Blick auf eine Kurvenscheibe und einen benachbarten Drehebel;
Fig. 7 ; eine schematische Draufsicht auf Kurvenscheibe und Drehebel mit einer zwischengeordneten Laufrolle;
Fig. 8 bis Fig. 10 ; unterschiedliche Arbeitsstellungen der gemäß Fig. 7 zusammenwirkenden Elemente.

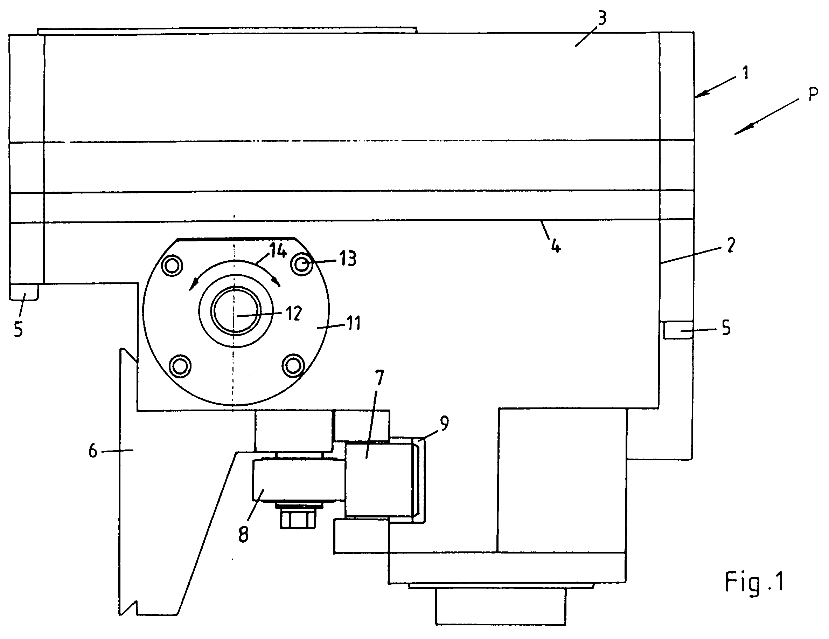

Gem. Fig. 1 weist eine Vorrichtung P zum Einlegen und/oder Entnehmen von Gegenständen insbesondere aus einem Formraum einer nicht näher gezeigten Spritzgießmaschine ein Gehäuse 1 auf, welches aus einem unteren Gehäuseteil 2 und einem oberen Gehäuseteil 3 besteht. Die Stoßlinie zwischen beiden Gehäuseteilen 2 und 3 ist mit 4 bezeichnet. Die Verbindung erfolgt beispielsweise über Schraubbolzen 5.

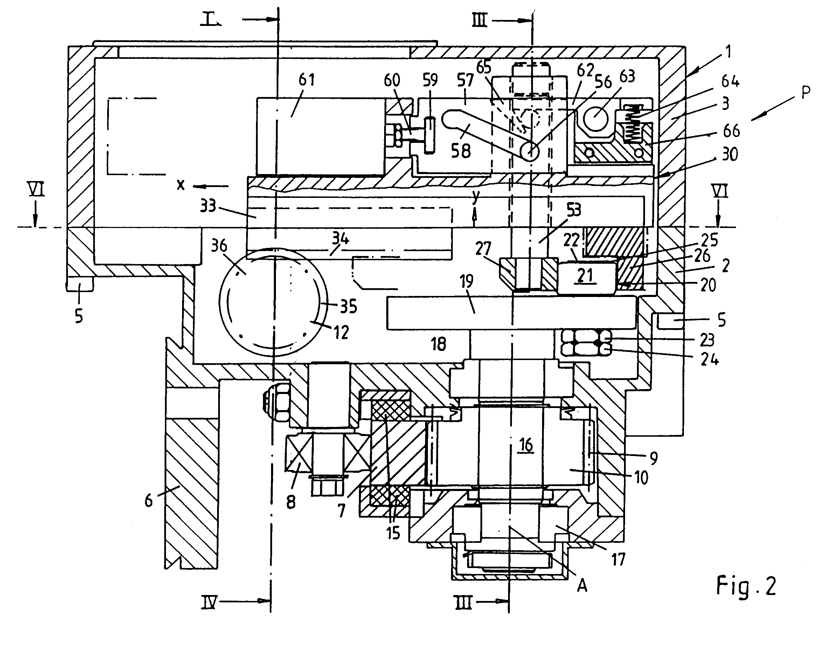

Die Vorrichtung P ist durch einen Anschlußflansch 6, mit einer Formhälfte der Spritzgießmaschine verbunden, und eine Zahnstange 7 durchgreift zumindest teilweise das Gehäuse 1 bzw. den unteren Gehäuseteil 2, wobei diese Zahnstange 7, ebenfalls nicht näher gezeigt, an einer gegenüberliegenden Formhälfte der Spritzgießmaschine befestigt ist. Die Zahnstange 7 wird über eine Gegendruckrolle 8 in Eingriff mit einer Zahnung 9 eines in Fig. 2 näher gezeigten Zahnrades 10 gehalten.

An eine Drehscheibe 11, welche eine das Gehäuse 1 querende Drehachse 12 besitzt, kann mittels entsprechender, Bohrungen 13 durchsetzender Befestigungselemente ein Handlinggerät angeflanscht werden, welches dann in Richtung des Doppelpfeiles 14 der Fig. 1 drehbar ist sowie in und aus dem Formraum einer Spritzgießmaschine geschwenkt werden kann. An dem Handlinggerät befinden sich dann entsprechende Sauger od.dgl. Entnahmeeinrichtungen, mittels welcher ein gerade durch Spritzgießen hergestelltes Produkt festgehalten und durch ein entsprechendes Schwenken aus dem Formraum entnommen wird. Danach erfolgt eine geordnete Ablage, die je nach Wunsch ausgestaltet sein kann.

In Fig. 2 ist deutlicher erkennbar, daß die Zahnstange 7 in Kunststofführungen 15 geführt ist, welche ein sicheres und verschleißfreies Gleiten der Zahnstange 7 ermöglichen.

Das Zahnrad 10 ist von einer Welle 16 drehgesichert durchsetzt, welche in entsprechenden Lagern 17 und 18 dreht. Weitere Lagerungen und Halterungen der Welle 16 sollen der Übersichtlichkeit halber vernachläßigt werden; sie sind handelsüblich.

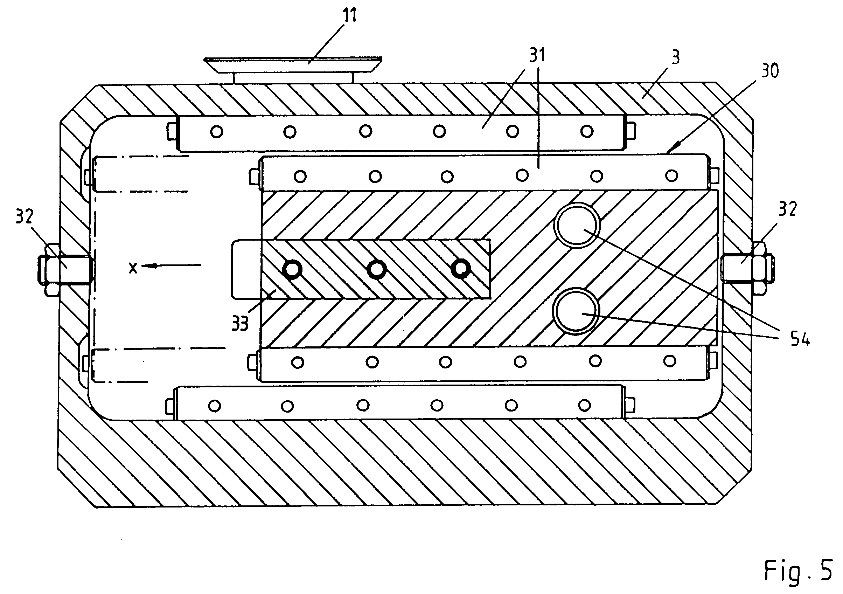

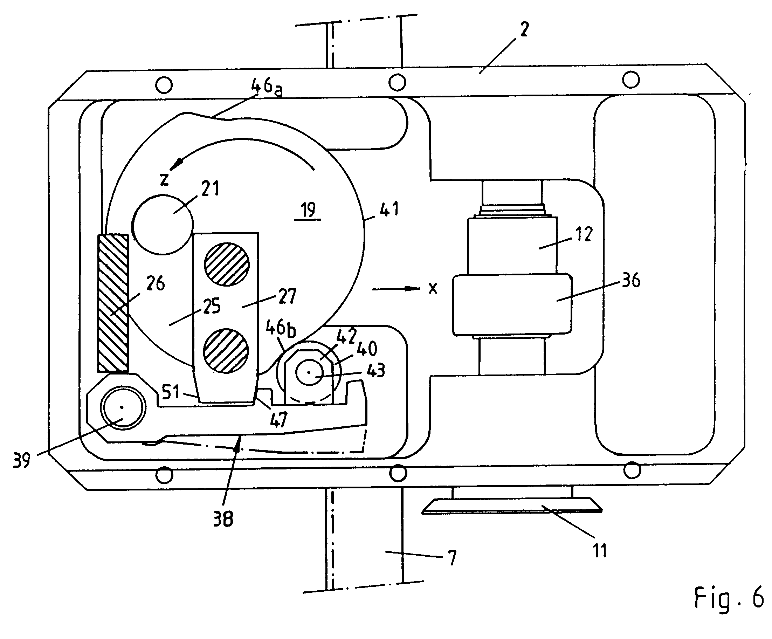

Wesentlich ist eine Kurvenscheibe 19 am oberen Ende der Welle 16. In dieser Kurvenscheibe 19 sitzt exzentrisch ein Mitnehmer 20, der im vorliegenden Ausführungsbeispiel aus einer Rolle 21 besteht, welche um einen Bolzen 22 dreht, der an der Kurvenscheibe 19 durch eine Mutter 23 und Kontermutter 24 festgelegt ist. Dieser Mitnehmer 20 dreht bei einer Drehung der Welle 16 um die Drehachse A in einem Radius um diese Drehachse A. Dabei greift er auf Teilstücken seines Weges, wie dies später noch beschrieben wird, in einen Führungskanal 25 ein, welcher von einem Kanalstreifen 26 und einem entfernbaren Anschlagstreifen 27 gebildet wird. Besser ist dies noch in Fig. 6 erkennbar, wobei dort die Rolle 21 gerade in den Führungskanal 25 einfährt. Wird die Kurvenscheibe 19 in Drehrichtung z weitergedreht, taucht die Rolle 21 tiefer in den Führungskanal 25 ein, wobei sie auf den entfernbaren Anschlagstreifen 27 drückt und hierdurch einen Schlitten 30 in Fig. 2 in Richtung x bewegt. Für diesen Schlitten 30 sind gemäß Fig. 5 handelsübliche Gleitführungen 31 vorgesehen. Mit diesen stützt sich der Schlitten 30 beidseits gegen den oberen Gehäusteil 3 ab, in dem ferner verstellbare Anschläge 32 vorgesehen sind, mit denen die Bewegung des Schlittens 30 in bzw. gegen die Richtung x begrenzt bzw. eingestellt werden kann.

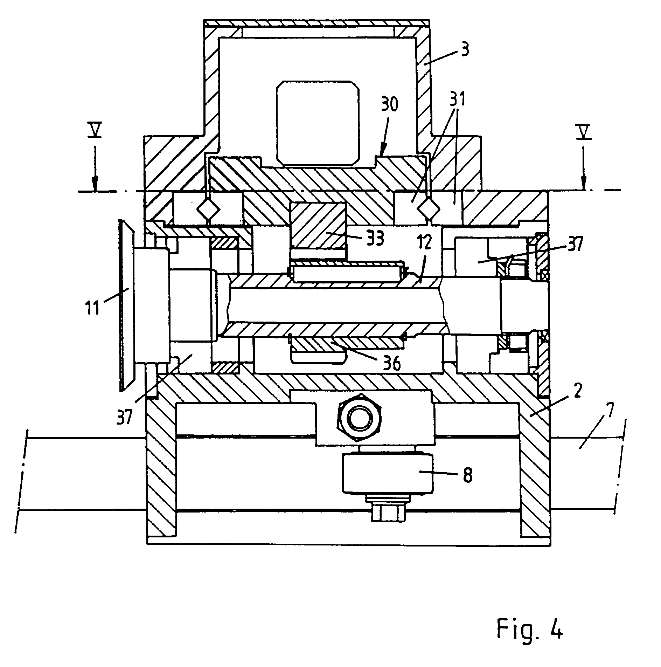

In den Schlitten 30 ist ein Zahnstangenabschnitt 33 eingesetzt, dessen Zahnung 34 mit der Zahnung 35 eines Zahnkranzes 36 in Verbindung steht, der wiederum der Achse 12 aufgesetzt ist. Dies ist in Fig. 4 näher gezeigt. Es versteht sich von selbst, daß die Drehachse 12 in entsprechenden Lagern 37 dreht. Auch dort sind weitere handelsübliche Elemente der Festlegung der Drehachse 12 nicht näher gezeigt.

Über die Drehachse 12 wird, wie oben beschrieben, die Drehscheibe 11 gedreht und damit das entsprechende Handlinggerät in den Formraum zwischen zwei Formhälften der Spritzgießmaschine hineinbewegt sowie nach der Aufnahme eines zu entfernenden Gegenstandes wieder aus dem Formraum geschwenkt. Dies geschieht in Abhängigkeit der Bewegung der Formhälften zueinander, welche über die Zahnstange 7 auf das Zahnrad 10 übertragen wird. Je nach Bewegung der Zahnstange 7 wird die Drehwelle 16 in die eine oder andere Richtung um ihre Drehachse A gedreht, wobei ihr die Kurvenscheibe 19 folgt. Die Rolle 21 drückt dabei jeweils entweder auf den entfernbaren Anschlagstreifen 27 oder -- bei einer Drehung entgegen der Drehrichtung z -- auf jenen Kanalstreifen 26, so daß der Schlitten 30 entweder in Richtung x oder in Gegenrichtung x bewegt wird. Die Bewegung des Schlittens 30 wird dann über den Zahnstangenabschnitt 33 auf den Zahnkranz 36 und damit auf die Drehachse 12 übertragen.

In beiden Endlagen verläßt die Rolle 21 den Führungskanal 25, so daß die Vorrichtung P völlig unabhängig von einem Überfahren der Endlage durch die Formhälften arbeitet. Sollte beispielsweise eine bewegbare Formhälfte der Spritzgießmaschine ihre Endlage um einige Zentimeter überfahren, was bei den erheblichen Gewichten dieser Formhälften in größeren Maschinen jederzeit möglich ist, so wird in diesem Fall der Schlitten 30 nicht mitgenommen, da die Rolle 21 aus dem Führungskanal 25 herausgeglitten ist und der Schlitten 30 gleichzeitig in seiner Endlage gehalten wird, wie dies weiter unten beschrieben ist. Damit wird immer ein gesicherter Zugriff des Handlinggerätes auf den zu entfernenden Gegenstand gewährleistet, unabhängig von dem Muß, mit dem die Formhälften ihre Endlage überfahren.

Die Festlegung des Schlittens 30 in seinen Endlagen erfolgt durch eine Einrichtung, wie sie in Fig. 6 näher gezeigt ist. Hierbei ist der Kurvenscheibe 19 ein Drehhebel 38 zugeordnet, welcher einends von einem gehäusefesten Drehbolzen 39 durchsetzt ist. Der Drehhebel 38 dreht um diesen Drehbolzen 39, wobei er sich über eine Laufrolle 40 gegen einen Umfang 41 der Kurvenscheibe 19 abstützt. Die Laufrolle 40 befindet sich dabei zwischen zwei Laschen 42 und ist dort ebenfalls drehbar um eine Achse 43 gehalten.

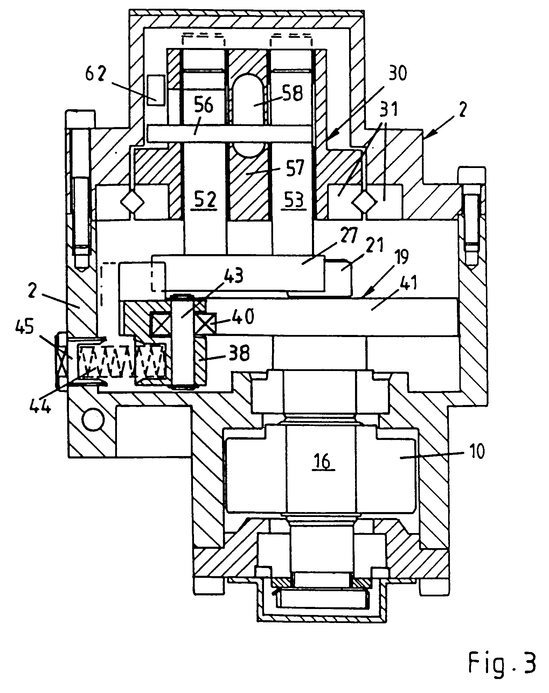

Damit der Drehhebel 38 bzw. die Laufrolle 40 immer dem Umfang 41 der Kurvenscheibe 19 folgt, ist gem. Fig. 3 eine Schraubenfeder 44 vorgesehen, welche sich einerseits gegen den Drehhebel 38 und andererseits gegen den unteren Gehäuseteil 2 abstützt; sie ist dort von einer entsprechenden Hülse 45 gehalten.

Die Kurvenscheibe 19 besitzt umfangsseitig zwei Abschnitte mit zueinander unterschiedlichen Radien r 1 und r 2. Am Übergang von dem kürzeren Radius r 1 zu dem größeren Radius r 2 ist jeweils eine Steigfläche 46 a und 46 b vorgesehen; diese Steigflächen 46 a, 46 b werden ebenfalls von der Laufrolle 40 abgerollt. Dabei ist der Beginn jeder Steigfläche 46 a bzw. 46 b für die Laudrolle 40 exakt an der Stelle vorgesehen, an der auch die Rolle 21 in den Führungskanal 25 eintaucht. Vor diesem Eintauchen läuft die Laufrolle 40 noch den Umfangsabschnitt 4l a der Kurvenscheibe 19 mit dem kürzeren Durchmesser r 1 ab. Das bedeutet, daß der Drehhebel 38 sich in einer eingeschwenkten Lage befindet, in welcher er mit einer Rastnase 46 eine Kante 47 des entfernbaren Anschlagsstreifen 27 hintergreift. Diese Kante 47 ist im übrigen um einen bestimmten Winkel schräg gestellt, wobei eine Anschlagkante 48 der Rastnase 46 ebenfalls diese Schrägstellung besitzt. Die Schrägstellung ist dabei so gewählt, daß bereits beim Beginn des Auf laufens der Laufrolle 40 auf die Steigfläche 46 b bzw. beim ersten Eintauchen der Rolle 21 in den Führungskanal 25 der Anschlagstreifen 27 freigegeben wird, obwohl die Rastnase 46 noch nicht gänzlich aus dem Berührungsbereich mit dem Anschlagstreifen 27 herausgeschwenkt ist. Auf diesem Weise wird gewährleistet, daß der Anschlagstreifen 27 in jedem Fall bei Beginn der Schlittenbewegung freigegeben ist.

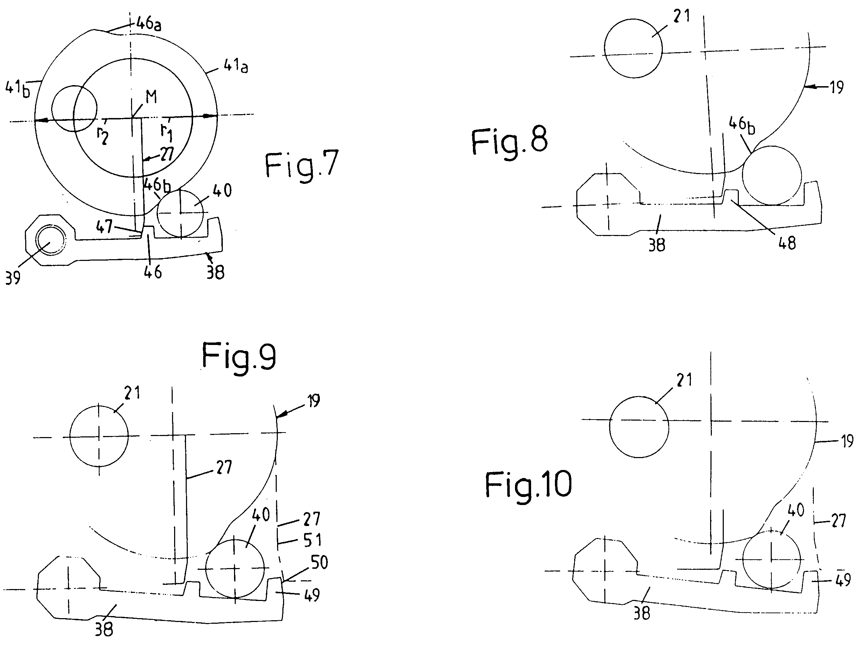

In Fig. 7 ist der Beginn des Auflaufens der Laufrolle 40 auf die Steigfläche 46 b angedeutet. In Fg. 8 ist die Laufrolle 40 bereits zur Hälfte auf die Steigfläche 46 b aufgelaufen und in den Fig. 9 und 10 wird der Anschlagstreifen 27 endgültig freigegeben. In Fig. 9, 10 ist auch die andere Endlage des Schlittens 30 strichpunktiert angedeutet. In der anderen Endlage befindet sich der Anschlagstreifen 27 in der strichpunktiert dargestellten Stellung. In dem Augenblick läuft auch die Rolle 21 wieder aus dem Führungskanal 25 heraus und gleichzeitig die Laufrolle 40 die Steigfläche 46 a von dem Abschnitt 41 b mit dem größeren Radius r 2 zu dem Abschnitt 41 a mit dem kleineren Radius r 1 ab. Das bedeutet, daß der Drehhebel 38 wieder in eine nähere Position zur Kurvenscheibe 19 hingeschwenkt wird, wobei eine Stütznase 49 mit einer Schrägfläche 50 an eine Schrägfläche 51 des Anschlagstreifens 27 angelegt wird. Diese Schrägfläche 51 befindet sich auf der anderen Seite der Kante 47. Hierdurch ist der Schlitten 30 in der anderen Endlage gesichert. Er wird erst dann wieder freigegeben, wenn die Kurvenscheibe 19 in eine Drehrichtung entgegen z versetzt worden ist und die Rolle 21 wieder in den Führungskanal 25 eintaucht. Dieser Vorgang wiederholt sich laufend bei jedem Öffnungs- bzw. Schließzyklus der Spritzgießmaschine.

In einigen Fällen ist es wünschenswert, daß der Roboter von der Bewegung der Formhälften der Spritzgießmaschine abgekoppelt wird. Dieser Fall ist beispielweise dann gegeben, wenn keine geordnete Entnahme erfolgen soll. Die Abkoppelung geschieht auf einfache Weise durch ein Anheben des entfernbaren Anschlagstreifens 27 in Richtung y, wie dies in Fig. 2 dargestellt ist. Der Anschlagstreifen 27 wird von zwei Gleitbolzen 52, 53 gehalten. Diese Gleitbolzen 52, 53 durchsetzen auch entsprechende Gleitführungen 54 (siehe Fig. 5) in dem Schlitten 30. Nach dem Schlitten 30 sind sie über einen Stift 56 miteinander verbunden, wobei dieser Stift 56 auch eine Kulisse 57 durchdringt. Diese Kulisse 57 ist verschiebbar auf der Oberfläche des Schlittens 30 angeordnet und besitzt einen schräg verlaufenden Führungsschlitz 58 für den Stift 56. Stirnwärtig ist die Kulisse 57 über einen in sie eingelassenen Verbindungskopf 59 mit einer Kolbenstange 60 verbunden, die in einen Pneumatikzylinder 61 eingreift.

Wird der Zylinder 61 unter Druck gesetzt, so bewegt die Kolbenstange 60 die Kulisse 57 gegen Richtung x, wobei der Stift 56 in dem Führungsschlitz 58 nach oben wandert, bis er eine strichpunktiert angedeutete Stellung eingenommen hat. Dieser Stift 56 nimmt aber über die Gleitbolzen 52, 53 auch den Anschlagstreifen 27 nach oben in Richtung y mit, so daß dieser Anschlagstreifen 27 aus dem Anlagebereich mit der Rolle 21 herausfährt. Die Rolle 21 ist somit einseitig freigegeben, so daß die Handlingeinrichtung nicht mehr in den Formraum zwischen die beiden Formhälften bewegt werden kann. Andererseits steht die Rolle 21 jedoch immer mit dem Kanalstreifen 26 in Wirkverbindung, so daß auf jeden Fall gewährleistet bleibt, daß die Handlingeinrichtung aus dem Formraum herausgeschwenkt ist. Dies dient der Sicherheit der gesamten Anlage.

Zur Halterung des Stiftes 56 in seiner strichpunktiert angedeuteten Lage dient eine Rastklinke 62, welche um eine Drehachse 63 schwenkbar ist. Andernends stützt sich die Rastklinke 62 gegen eine Schraubenfeder 64 ab. Gegen den Druck dieser Schraubenfeder 64 wird ein Fanghaken 65 der Rastklinke 62 beim Anheben des Stiftes 56 ebenfalls angehoben, so daß er dann nach Überschreiten eines bestimmten Punktes in Fangposition zurückschnappen kann.

Die Rastklinke 62 und die Schraubenfeder 64 bzw. die Drehachse 63 sind über einen entsprechenden Halter 66 mit dem Schlitten 30 verbunden.

## Patentansprüche

1. Vorrichtung zum Einlegen und/oder Entnehmen von Gegenständen in eine und/oder aus einer Maschine, insbesondere aus einem Formraum zwischen zwei Formhälften einer Spritzgießmaschine, mittels einer Handlingeinrichtung, welche über Getriebeelemente (11,12,36), die eine Drehachse (12) aufweisen, mit einem Schlitten (30) verbunden ist, der zwischen zwei Streifen (26,27) einen Führungskanal (25) für einen Mitnehmer (20) ausbildet, welcher exzentrisch um eine Welle (16) dreht, die über weitere Getriebeelemente (7,10) mit der Maschine zur Bewegungsableitung koppelbar ist, wobei der Mitnehmer in Endlagen aus dem Führungskanal (25) herausfahrbar und der Schlitten (30) in den Endlagen von einer Verriegelungseinheit (38) gehalten ist, dadurch gekennzeichnet, daß der Mitnehmer (20) an einer Kurvenscheibe (19) exzentrisch lagest, die einen mit einem der den Führungskanal (25) bildenden Anschlagstreifen (27) zur Verriegelung des Schlittens (30) in den Endlagen zusammenwirkenden Drehhebel (38) betätigt.

2. Vorrichtung nach Anspruch 1, dadurch gekennzeichnet, daß der Drehhebel (38) mit einer Laufrolle (40) dem Umfang (41) der Kurvenscheibe (19) anliegt.

3. Vorrichtung nach Anspruch 1 oder 2, dadurch gekennzeichnet, daß die Kurvenscheibe (19) zwei Umfangsabschnitte (41a und 41b) aufweist, welche jeweils, einen unterschiedlichen Radius (r1 bzw.r2) besitzen.

4. Vorrichtung nach Anspruch 3, dadurch gekennzeichnet, daß die Umfangsabschnitte (41a und 41b) mit den unterschiedlichen Radien (r1 bzw. r2) über Steigflächen (46a und 46b) miteinander verbunden sind.

5. Vorrichtung nach Anspruch 4, dadurch gekennzeichnet, daß die Zuordnung von Mitnehmer (20), Laufrolle (40) und Steigflächen (46a und 46b) so erfolgt, daß die Laufrolle (40) sich dann am Beginn oder Ende einer Steigfläche (46a, 46b) befindet, wenn der Mitnehmer (20) in den Führungskanal (25) eintaucht oder aus ihm herausfährt.

6. Vorrichtung nach einem der Ansprüche 1 bis 5, dadurch gekennzeichnet, daß der Drehhebel (38) eine Rastnase (46) und eine Stütznase (49) aufweist, welche jeweils in den Endlagen von einer Seite her an dem Auschlagstreifen (27) anschlagen.

7. Vorrichtung nach Anspruch 6, dadurch gekennzeichnet, daß die Rastnase (46) eine schräge Anschlagkante (48) aufweist, welche mit einer entsprechenden Kante (47) an dem Auschlagstreifen (27) zusammenwirkt.

8. Vorrichtung nach Anspruch 6 oder 7, dadurch gekennzeichnet, daß die Stütznase (49) eine Schrägfläche (50) besitzt, welche mit einer Schrägfläche (51) an dem Auschlagstreifen (27) zusammenwirkt.

9. Vorrichtung nach einem der Ansprüche 1 bis 8, dadurch gekennzeichnet, daß der Drehhebel (38) an einem parallel zur Drehachse (A) angeordneten Drehbolzen (39) befestigt ist und sich über eine Schraubenfeder (44) abstützt, welche die Laufrolle (40) in Anlage an dem Umfang (41) der Kurvenscheibe (19) hält.

10. Vorrichtung nach einem der Ansprüche 1 bis 9, dadurch gekennzeichnet, daß der Auschlagstreifen (27) aus dem Anschlagbereich des Mitnehmers (20) entfernbar ist.

11. Vorrichtung nach Anspruch 1 oder 10, dadurch gekennzeichnet, daß der Auschlagstreifen (27) an Gleitbolzen (52, 53) hängt, welche über einen Stift (56) miteinander verbunden sind.

12. Vorrichtung nach Anspruch 11, dadurch gekennzeichnet, daß der Stift (56) einen schrägen Führungsschlitz (58) in einer Kulisse (57) durchsetzt, welcher mittels eines Antriebes verschiebbar ist.

13. Vorrichtung nach Anspruch 12, dadurch gekennzeichnet, daß der Antrieb aus einem Pneumatikzylinder (61) besteht, dessen Kolbenstange (60) mit der Kulisse (57) verbunden ist.

14. Vorrichtung nach einem der Ansprüche 11 bis 13, dadurch gekennzeichnet, daß der Stift (56) in seiner angehobenen Endlage durch eine Rastklinke (62) festgelegt ist.

## Claims

1. Apparatus for laying objects in and/or removing them from a machine, in particular a moulding chamber between two mould halves of an injection moulding machine, by means of a handling device which is connected by gear elements (11, 12, 36) comprising a rotary spindle (12), to a carriage (30) which between two strips (26, 27) forms a guide channel (25) for a driver (20) which rotates eccentrically about a shaft (16) which can be coupled by additional gear elements (7, 10) to the machine for the derivation of movement, wherein the driver in end positions can be moved out of the guide channel (25) and the carriage (30) is held in the end positions by a locking unit (38), characterised in that the driver (20) is mounted eccentrically on a cam plate (19) which actuates a rotary lever (38) cooperating with a stop strip (27) forming the guide channel (25) for locking the carriage (30) in the end positions.

2. Apparatus according to claim 1, characterised in that the rotary lever (38) abuts by a roller (40) against the circumference (41) of the cam plate (19).

3. Apparatus according to claim 1 or 2, characterised in that the cam plate (19) comprises two circumferential sections (41a and 41b) which have in each case a different radius (r1 or r2).

4. Apparatus according to claim 3, characterised in that the circumferential sections (41a and 41b) with the different radii (r1 or r2) are connected to each other by inclined surfaces (46a and 46b).

5. Apparatus according to claim 4, characterised in that the coordination of driver (20), roller (40) and inclined surfaces (46a and 46b) is such that the roller (40) is located at the beginning or end of an inclined surface (46a, 46b) when the driver (20) enters the guide channel (25) or moves out of it.

6. Apparatus according to any of claims 1 to 5, characterised in that the rotary lever (38) comprises a latch projection (46) and a support projection (49) which in each case in the end positions from one side strike the stop strip (27).

7. Apparatus according to claim 6, characterized in that the latch projection (46) comprises a sloping stop edge (48) which cooperates with a corresponding edge (47) on the stop strip (27).

8. Apparatus according to claim 6 or 7, characterized in that the support projection (49) has a sloping surface (50) which cooperates with a sloping surface (51) on the stop strip (27).

9. Apparatus according to any of claims 1 to 8, characterized in that the rotary lever (38) is attached to a pivot pin (39) arranged parallel to the axis of rotation (A) and is supported by a coil spring (44) which keeps the roller (40) in contact with the circumference (41) of the cam plate (19).

10. Apparatus according to any of claims 1 to 9, characterized in that the stop strip (27) can be removed from the striking range of the driver (20).

11. Apparatus according to claim 1 or 10, characterized in that the stop strip (27) hangs from sliding bolts (52, 53) which are connected to each other by a pin (56).

12. Apparatus according to claim 11, characterized in that the pin (56) passes through an oblique guide slot (58) in a connecting link (57) which is displaceable by means of a drive.

13. Apparatus according to claim 12, characterized in that the drive consists of a pneumatic cylinder (61) of which the piston rod (60) is connected to the connecting link (57).

14. Apparatus according to any of claims 11 to 13, characterized in that the pin (56) is fixed in its raised end position by a latch pawl (62).

## Revendications

1. Dispositif d'introduction et/ou d'enlèvement d'objets dans une et/ou hors d'une machine, en particulier hors d'un espace de moulage entre deux demi-moules d'une machine à mouler par injection, à l'aide d'un organe de manipulation qui est relié par des éléments de transmission (11, 12, 36) présentant un axe de rotation (12), à un chariot (30), qui forme entre deux barrettes (26, 27) un canal de guidage (25) pour un organe d'entraînement (20) tournant excentriquement autour d'un arbre (16), qui est susceptible d'être accouplé par d'autres éléments de transmission (7, 10) à la machine pour modifier le déplacement, l'organe d'entraînement étant susceptible, dans les positions d'extrémité, de sortir du canal de guidage (25) et le chariot (30) étant retenu dans les positions d'extrémité par une unité de verrouillage, caractérisé en ce que l'organe d'entraînement (20) est en appui excentrique sur un disque de came (19), qui actionne un levier tournant (38) coopérant avec l'une des barrettes de butée (27) constituant le canal de guidage (25) afin de verrouiller le chariot (30) dans les positions d'extrémité.

2. Dispositif selon la revendication 1, caractérisé en ce que levier tournant (38) est appliqué par l'intermédiaire d'un galet tournant (40) sur la périphérie (41) du disque de came (19).

3. Dispositif selon la revendication 1 ou 2, caractérisé en ce que le disque de came (19) comporte deux segments de périphérie (41a et 41b), qui présente des rayons différents (r1 ou r2).

4. Dispositif selon la revendication 3, caractérisé en ce que les segments de périphérie (41a et 41b) présentant des rayons différents (r1 ou r2) sont reliés l'un à l'autre par des surfaces montantes (46a et 46b).

5. Dispositif selon la revendication 4, caractérisé en ce que l'agencement de l'organe d'entraînement (20), du galet tournant (40) et des surfaces montantes (46a et 46b) est réalisé de telle façon que le galet tournant (40) se trouve précisément au début ou à la fin d'une surface montante (46a, 46b), lorsque l'organe d'entraînement (20) pénètre dans le canal de guidage (25) ou bien en ressort.

6. Dispositif selon l'une des revendications 1 à 5, caractérisé en ce que le levier tournant (38) comporte un ergot de verrouillage (46) et un ergot d'appui (49), qui viennent en butée chacun dans les positions d'extrémité en se rapprochant d'une face de la barrette de butée (27).

7. Dispositif selon la revendication 6, caractérisé en ce que l'ergot de verrouillage (46) comporte une face de butée inclinée (48), qui coopère avec une face correspondante (47) sur la barrette de butée (27).

8. Dispositif selon la revendication 6 ou 7, caractérise en ce que l'ergot d'appui (49) présente une surface inclinée (50) qui coopère avec une surface inclinée (51) sur la barrette d'appui (27).

9. Dispositif selon l'une des revendications 1 à 8, caractérisé en ce que le levier tournant (38) est fixé à un boulon tournant (39) disposé parallèlement à l'axe de rotation (A) et s'appuie sur un ressort hélicoïdal (44), qui applique le galet tournant (40) en appui sur la périphérie (41) du disque de came (19).

10. Dispositif selon l'une des revendications 1 à 9, caractérisé en ce que la barrette de butée (27) est susceptible d'être éloignée de la zone de butée de l'organe d'entraînement (20).

11. Dispositif selon la revendication 1 ou 10, caractérisé en ce que la barrette de butée (27) est suspendue à des boulons coulissants (52, 53), qui sont reliés l'un à l'autre par l'intermédiaire d'une broche (56).

12. Dispositif selon la revendication 11, caractérisé en ce que la broche (56) traverse une fente de guidage inclinée (58) dans une coulisse (57), qui est susceptible d'être déplacée par un moyen d'entraînement.

13. Dispositif selon la revendication 12, caractérisé en ce que le moyen d'entraînement se compose d'un vérin pneumatique (61), dont la tige de piston (60) est reliée à la coulisse (57).

14. Dispositif selon l'une des revendications 11 à 13, caractérisé en ce que la broche (56) est retenue dans sa position d'extrémité soulevée par un cliquet de verrouillage (62).
